# EUROPÄISCHE PATENTANMELDUNG

(11) **EP 1 919 159 A2**
(43) Veröffentlichungstag der Anmeldung: **07.05.2008**
(21) Anmeldenummer: 07021402.8
(22) Anmeldetag: 02.11.2007
(51) Int. Cl.: H04L 29/06

(54) **Verfahren und System zur automatisierten Vermittlung von Informationen**

(30) Priorität: 03.11.2006 DE 102006052273
(71) Anmelder: CIPS GmbH, 41334 Nettetal (DE)
(72) Erfinder: Grieger, Walter, 41334 Nettetal (DE)
(74) Vertreter: Stenger, Watzke & Ring

(57) **Zusammenfassung**

Die Erfindung betrifft ein Verfahren zur automatisierten Vermittlung von Informationen zwischen kommunikationstechnisch miteinander verbundenen Teilnehmern eines Informationsvermittlungssystems. Um ein verbessertes Verfahren zur automatisierten Vermittlung von Informationen bereitzustellen, wird mit der Erfindung ein Verfahren vorgeschlagen, bei dem bei dem einem ersten Teilnehmer (32) eine ihn eineindeutig identifizierende Teilnehmerkennung zugeordnet und diese Teilnehmerkennung einem zweiten Teilnehmer (33) zur eineindeutigen Identifizierung des ersten Teilnehmers (32) mitgeteilt wird, bei dem der erste Teilnehmer (32) eine an den zweiten Teilnehmer (33) zu übermittelnde Information generiert, die zusammen mit der den ersten Teilnehmer (32) eineindeutig identifizierende Teilnehmerkennung an einem Vermittler (11) übersandt wird, der eine Vermittlung an den zweiten Teilnehmer (33) automatisch vornimmt, indem die vom ersten Teilnehmer (32) generierte Information zusammen mit der Teilnehmerkennung des ersten Teilnehmers mittels des Vermittlers (11) an den zweiten Teilnehmer (33) zur weiteren Verarbeitung übertragen wird.

## Beschreibung

Die Erfindung betrifft ein Verfahren zur automatisierten Vermittlung von Informationen zwischen kommunikationstechnisch miteinander verbundenen Teilnehmern eines Informationsvermittlungssystems. Darüber hinaus betrifft die Erfindung ein solches Informationsvermittlungssystem.

Nach dem erfindungsgemäßen Verfahren bzw. nach dem erfindungsgemäßen System geht es um die automatisierte Vermittlung, das heißt Weiterleitung von Informationen, und zwar von einem ersten Teilnehmer zu einem zweiten Teilnehmer. Verfahren und Systeme, die eine Kommunikation zwischen zwei Teilnehmern eines Kommunikationsnetzes erlauben, sind aus dem Stand der Technik natürlich bekannt, weshalb es eines gesonderten druckschriftlichen Nachweises an dieser Stelle nicht bedarf.

Obgleich Verfahren und Systeme zur Informationsvermittlung aus dem Stand der Technik bekannt sind, besteht Verbesserungsbedarf. Es ist im besonderen erwünscht, eine in der Abwicklung vereinfachte Kommunikation zu ermöglichen, und dies bei gleichzeitiger Verbesserung der Kommunikationssicherheit. Es ist deshalb die **Aufgabe** der Erfindung, ein neues und insofern verbessertes Verfahren zur automatisierten Vermittlung von Informationen bereitzustellen. Ferner soll mit der Erfindung ein Informationsvermittlungssystem vorgeschlagen werden.

Verfahrensseitig wird zur **Lösung** dieser Aufgabe ein Verfahren zur automatisierten Vermittlung von Informationen zwischen kommunikationstechnisch miteinander verbundenen Teilnehmern eines Informationsvermittlungssystems vorgeschlagen, bei dem einem ersten Teilnehmer eine ihn eineindeutig identifizierende Teilnehmerkennung zugeordnet und diese Teilnehmerkennung einem zweiten Teilnehmer zur eineindeutigen Identifizierung des ersten Teilnehmers mitgeteilt wird, bei dem der erste Teilnehmer eine an den zweiten Teilnehmer zu übermittelnde Information generiert, die zusammen mit der den ersten Teilnehmer eineindeutig identifizierenden Teilnehmerkennung an einen Vermittler übersandt wird, der eine Vermittlung an den ersten Teilnehmer automatisch vornimmt, indem die vom ersten Teilnehmer generierte Information zusammen mit der Teilnehmerkennung des ersten Teilnehmers mittels des Vermittlers an den zweiten Teilnehmer zur weiteren Verarbeitung übertragen wird.

Systemseitig wird mit der Erfindung ein Informationsvermittlungssystem zur automatisierten Vermittlung von Informationen zwischen zwei kommunikationstechnisch miteinander verbundenen Teilnehmern vorgeschlagen, das über ein die Teilnehmer kommunikationstechnisch miteinander verbindendes Datennetz und eine Einrichtung zur automatischen Vermittlung von Informationen zwischen den beiden Teilnehmern verfügt, wobei die Einrichtung kommunikationstechnisch den beiden Teilnehmern zwischengeschaltet ist, wobei für eine eineindeutige Identifizierung eines ersten Teilnehmers gegenüber einem zweiten Teilnehmer dem ersten Teilnehmer eine eineindeutige Teilnehmerkennung zuordbar ist, die an den zweiten Teilnehmer unter Zwischenschaltung der Einrichtung zur automatischen Informationsvermittlung übertragbar ist.

Die Besonderheit des erfindungsgemäßen Verfahrens bzw. des erfindungsgemäßen Systems ist in dem Vermittler bzw. dessen Funktionsweise zu sehen. Der Vermittler ist an den ersten Teilnehmer einerseits sowie an den zweiten Teilnehmer andererseits kommunikationstechnisch angeschlossen. Die beiden Teilnehmer können also unter Zwischenschaltung des Vermittlers miteinander kommunizieren. Eine direkte kommunikationstechnische Verbindung der beiden Teilnehmer kann vorgesehen sein, für die erfindungsgemäße Verfahrensabwicklung kommt es jedoch darauf an, daß neben einer möglichen direkten Kommunikation zwischen den beiden Teilnehmern auch eine solche über den erfindungsgemäß vorgesehenen Vermittler möglich ist.

Der nach dem erfindungsgemäßen Verfahren bzw. nach dem erfindungsgemäßen System vorgesehene Vermittler übernimmt zweierlei Aufgaben. Es wird mit dem Vermittler zum einen sichergestellt, daß eine Kommunikation zwischen den beiden Teilnehmern unabhängig von der von den Teilnehmern jeweils genutzten Kommunikationstechnik möglich ist. Vom Vermittler wird also die Kommunikationsintelligenz zur Verfügung gestellt, weshalb es auf die bei den beiden Teilnehmern jeweils vorhandene Kommunikationsintelligenz nicht ankommt. Zum anderen gestattet es der Vermittler, daß unterschiedliche Kommunikationsendgeräte unabhängig von irgendwelchen Schnittstellen in Kommunikation miteinander treten können. Der Vermittler stellt die Schnittstellen für den kommunikationstechnischen Anschluß verschiedenster Kommunikationsendgeräte zur Verfügung, so daß Kommunikationsendgeräte in kommunikationstechnischen Kontakt gebracht werden können, was ohne Vermittler nicht möglich wäre. Kompatibilitätsprobleme können so dem Grunde nach ausgeschlossen werden.

Der sowohl verfahrens- als auch systemseitig vorgesehene Vermittler kann auch als Übersetzer bezeichnet werden. Dies deshalb, weil er es ermöglicht, das beispielsweise vom ersten Teilnehmer genutzte und vom zweiten Teilnehmer in dieser Form nicht verstandene Kommunikationsformat an das vom zweiten Teilnehmer genutzte Kommunikationsformat anzupassen, das heißt zu übersetzen. Kommunikationsendgeräte, zwischen denen eine Kommunikation dem Grunde nach nicht möglich wäre, können so, das heißt unter Zwischenschaltung des Vermittlers für eine gegenseitige Kommunikation genutzt werden.

Nach dem erfindungsgemäßen Verfahren bzw. dem erfindungsgemäßen System wird zumindest dem ersten Teilnehmer eine eineindeutige Identifizierung, das heißt eine Teilnehmerkennung zugeordnet. Sinn und Zweck dieser Teilnehmerkennung ist es, daß zumindest der erste Teilnehmer durch den Vermittler und/oder den zweiten Teilnehmer eineindeutig identifizierbar ist. Dies erlaubt eine direkte Zuordnung und Adressierung an einen aus einer Gruppe ausgewählten ersten Teilnehmer.

Bei dem ersten Teilnehmer kann es sich beispielsweise um einen Internetnutzer handeln. Der zweite Teilnehmer ist ein Informationsdienst im Internet, beispielsweise ein sogenannter Contentanbieter. Zur Kommunikation mit dem zweiten Teilnehmer verfügt der erste Teilnehmer beispielsweise über ein Mobiltelefon, einen Computer, ein Internetradio oder dergleichen. Unter Zwischenschaltung des erfindungsgemäß vorgesehenen Vermittlers kann nun beispielsweise das vom ersten Teilnehmer als Kommunikationsendgerät genutzte Internetradio dazu genutzt werden, eine Information an den zweiten Teilnehmer, das heißt den Contentanbieter zu versenden. Damit der zweite Teilnehmer über die Person des ersten Teilnehmers informiert ist, wird die von dem ersten Teilnehmer an den zweiten Teilnehmer zu versendende Information samt der eineindeutig zu identifizierenden Teilnehmerkennung des ersten Teilnehmers übersandt.

Der zweite Teilnehmer erhält nach dem erfindungsgemäßen Verfahren also nicht nur die für ihn bestimmte Information vom ersten Teilnehmer, sondern auch die Teilnehmerkennung des ersten Teilnehmers. Für den zweiten Teilnehmer ist der erste Teilnehmer damit identifizierbar. Die Rückübersendung einer Information an den ersten Teilnehmer ist dem zweiten Teilnehmer damit möglich. Der erste und der zweite Teilnehmer stehen also sowohl in der einen als auch in der anderen Richtung in Kommunikation miteinander, das heißt zwischen den beiden Teilnehmern existiert sowohl ein Hinkanal als auch ein Rückkanal.

Bevorzugterweise wird als Teilnehmerkennung die eineindeutige Gerätenummer des vom ersten Teilnehmer genutzten Kommunikationsendgerätes genutzt, was beispielsweise die sogenannte MAC-Nummer sein kann. Es kann gemäß einem weiteren Merkmal der Erfindung im übrigen vorgesehen sein, daß sich der erste Teilnehmer gegenüber dem zweiten Teilnehmer in einem der eigentlichen Kommunikation vorangeschalteten Verfahrensschritt zunächst einmal anmelden, das heißt registrieren muß. Im Zuge des Registrierungsschrittes wird dem zweiten Teilnehmer vom ersten Teilnehmer seine eineindeutige Kennung erstmalig mitgeteilt, wobei gegebenenfalls weitere, unter Umständen persönliche Daten des ersten Teilnehmers vom ersten Teilnehmer an den zweiten Teilnehmer übermittelt werden. Der zweite Teilnehmer ist aufgrund der persönlichen Daten über die Person des ersten Teilnehmers informiert, wobei eine Identifizierung des ersten Teilnehmers, das heißt eine Zuordnung zu den vorab an den zweiten Teilnehmer übersandten persönlichen Daten anhand der eineindeutigen Teilnehmerkennung, beispielsweise anhand der Gerätenummer des vom ersten Teilnehmer verwendeten Kommunikationsendgeräte erfolgt. Es kann aus Datenschutzgründen vorgesehen sein, daß beim Vermittler persönliche Daten über den ersten und/oder den zweiten Teilnehmer nicht verbleiben. Eine Identifizierung der Person des ersten Teilnehmers kann dann ausschließlich beim zweiten Teilnehmer, nicht aber beim Vermittler stattfinden.

Eine besondere Anwendung des erfindungsgemäßen Verfahrens und/oder des erfindungsgemäßen Systems ist in der Möglichkeit zu sehen, eine Produktkaufabwicklung zu automatisieren. In dieser besonderen Ausgestaltung der Erfindung wird vorgeschlagen ein Verfahren zur automatisierten Produktkaufabwicklung, bei dem einem ersten Teilnehmer, das heißt dem Produktkäufer eine ihn eineindeutig identifizierende Produktkäuferkennung zugeordnet und diese Produktkäuferkennung einem zweiten Teilnehmer, das heißt dem Produktanbieter zur eineindeutigen Identifizierung des Produktkäufers mitgeteilt wird, bei dem von dem Produktkäufer ein von ihm wünschenswerterweise zu erwerbendes Produkt ausgewählt wird, wobei mit Auswahl des zu erwerbenden Produktes durch den Produktkäufer eine das Produkt eineindeutig identifizierende Produktkennung zusammen mit der dem Produktanbieter bekannten Produktkäuferkennung über ein Datennetz an den Produktanbieter automatisch übertragen wird, und bei dem produktanbieterseitig die vom Produktkäufer hierdurch initiierte Produktkaufanfrage anhand der an den Produktanbieter übermittelten Produktkennung und der an den Produktanbieter übermittelten Produktkäuferkennung automatisch verarbeitet und im Falle der Produktverfügbarkeit abgewickelt wird.

Aus sicherheitstechnischen Gründen kann ergänzend zum Vorbeschriebenen vorgesehen sein, daß nach einer erfolgreichen Abwicklung einer Produktkaufanfrage gemäß vorbeschriebener Verfahrensweise der tatsächliche Produktkauf durch den Produktkäufer zu bestätigen ist, was beispielsweise ohne Zwischenschaltung des Vermittlers, das heißt auf direktem kommunikationstechnischen Weg zwischen erstem Teilnehmer und zweitem Teilnehmer, das heißt zwischen Produktkäufer und Produktanbieter erfolgen kann.

Unter dem Begriff des "Produktes" sind im Sinne der Erfindung Produkte aller Art, Form und Größe zu verstehen. Hierzu gehören auch Produkte digitaler Art, wie zum Beispiel Musikstücke, Videoclips, Filme, Fotos, Bilder oder dergleichen Multimediaprodukte.

Im nachfolgenden soll die Erfindung anhand einer besonderen Ausführungsform erläutert werden, auf die die Erfindung allerdings nicht beschränkt ist. Gemäß dieser besonderen Ausführungsform geht es um die Kaufabwicklung von Multimediaprodukten, wie zum Beispiel von Musikstücken.

In der jüngsten Vergangenheit ist der Musikmarkt verstärkt dazu übergegangen, Musikstücke zum Kauf über das Internet anzubieten. In diesem Zusammenhang sind sogenannte Musikdownloadplattformen bekannt geworden, die es ermöglichen, Musikstücke gegen Entgelt aus dem Internet herunterzuladen. Gängige Downloadformate sind beispielsweise MP3, WMA, WAV.

Zum Herunterladen eines Musikstücks nach dem Stand der Technik hat ein Musikstückkäufer über das Internet zunächst eine der im Internet präsenten Musikdownloadplattformen anzuwählen. Alsdann hat der Musikstückkäufer das von ihm wünschenswerterweise zu erwerbende Musikstück zu identifizieren, was in aller Regel durch Benennung des Interpreten und den Musiktitel, das heißt den Musikstücknamen zu erfolgen hat. Anhand dieser vom Musikstückkäufer einzugebenden Informationen bezüglich des von ihm gewünschten Musikstückes ermittelt die Musikdownloadplattform, ob das vom Musikstückkäufer gewünschte Musikstück zur Verfügung steht, das heißt über die Musikdownloadplattform heruntergeladen werden kann. Bejahendenfalls wird der Musikstückkäufer über den Preis des von ihm gewünschten Musikstückes informiert und zur Begleichung desselben aufgefordert, was beispielsweise über Kreditkarte erfolgen kann. Nach erfolgter Bezahlung steht das vom Musikstückkäufer gewünschte Musikstück zum Herunterladen bereit.

Das Herunterladen eines Musikstückes kann auf ein dazu geeignetes und über das Internet mit der Musikdownloadplattform in kommunikationstechnischer Verbindung stehendes Gerät erfolgen, wie zum Beispiel einen Computer, ein Mobiltelefon oder dergleichen. Sobald das vom Musikstückkäufer gewünschte Musikstück heruntergeladen ist, kann dieses seitens des Musikstückkäufers mittels eines dafür geeigneten Gerätes gespeichert und für eine weitere Verwendung gegebenenfalls auf eine CD oder DVD gebrannt bzw. auf einem anderen Speichermedium, wie zum Beispiel einer Chipkarte gespeichert werden.

Obgleich sich die vorbeschriebene Verfahrensabwicklung zum Kauf eines Musikstückes steigender Beliebtheit erfreut und sich insoweit im Praxiseinsatz bewährt hat, ist sie nicht frei von Nachteilen. Von besonderem Nachteil ist, daß der Musikstückkäufer das von ihm wünschenswerterweise zu erwerbende Musikstück anhand des Interpreten des Musikstückes sowie des Musiktitels, das heißt den Musikstücknamen zu identifizieren bzw. aus einer von der Musikdownloadplattform bereitgestellten Musikstückliste auszuwählen hat. Wenn der Musikstückkäufer den Interpreten und/oder den Musiktitel des von ihm gewünschten Musikstückes nicht kennt, ist ein Herunterladen des vom Musikstückkäufer wünschenswerterweise zu erwerbenden Musikstückes in nachteiliger Weise nicht möglich, weil der Musikstückkäufer schlichtweg das von ihm gewünschte Musikstück gegenüber der Musikdownloadplattform nicht benennen, das heißt identifizieren kann. Gerade aber bei Musikstücken sind einem Musikstückkäufer häufig der Name des Interpreten des Musikstückes und/oder der Musiktitel nicht bekannt. Beispielsweise hört ein Musikstückkäufer ein bestimmtes Musikstück im Radio und möchte dieses daraufhin erwerben, ohne den Interpreten des Musikstückes und/oder den Musiktitel, das heißt den Musikstücknamen zu kennen. Die aus dem Stand der Technik vorbekannte und vorbeschriebene Verfahrensabwicklung zum Herunterladen eines bestimmten Musikstückes aus dem Internet versagt in diesem Fall, weil es dem Musikstückkäufer mangels Kenntnis über den Interpreten des von ihm gewünschten Musikstückes und/oder den Musiktitel, das heißt den Musikstücknamen nicht möglich ist, das von ihm gewünschte Musikstück gegenüber der Musikdownloadplattform zu benennen, das heißt zu identifizieren.

Das erfindungsgemäße Verfahren bzw. das erfindungsgemäße System schafft hier Abhilfe. Mit Blick auf den vorbeschriebenen Anwendungsfall des Musikstückkaufes erlaubt das erfindungsgemäße Verfahren nämlich eine Informationsvermittlung vom Produktkäufer an den Produktanbieter, das heißt vom Musikstücksuchenden zum Musikstückanbieter, ohne daß es seitens des Musikstücksuchenden erforderlich wäre, sämtliche Produktdaten, das heißt sämtliche Informationen über das von ihm gewünschte Musikstück zu kennen. Das erfindungsgemäße Verfahren zeichnet sich insofern dadurch aus, daß der Produktkäufer das von ihm wünschenswerterweise zu erwerbende Produkt gegenüber dem Produktanbieter nicht zu identifizieren hat. Die Produktidentifizierung erfolgt vielmehr vollautomatisch, was es dem Produktkäufer ermöglicht, auch ein solches Produkt zu erwerben, welches er gegenüber einem Produktanbieter nicht selbst zweifelsfrei identifizieren kann. Im Falle eines Musikstückes als Produkt bedeutet dies, daß ein Produktkäufer, das heißt ein Musikstückkäufer auch ein solches Musikstück bei einem Produktanbieter, das heißt einem Musikstückanbieter käuflich erwerben kann, von welchem er den Namen des Interpreten oder den Musiktitel, das heißt den Musikstücknamen nicht kennt.

Mit Blick auf das vorgenannte Ausführungs-, das heißt Anwendungsbeispiel kann die erfindungsgemäße Verfahrensdurchführung wie folgt von statten gehen:

Grundlegende Voraussetzung für die erfindungsgemäße Verfahrensdurchführung ist, daß der Produktkäufer dem Produktanbieter bekannt ist. Erfindungsgemäß ist deshalb vorgesehen, daß dem Produktkäufer eine ihn eineindeutig identifizierende Produktkäuferkennung zugeordnet und diese Produktkäuferkennung dem Produktanbieter zur eineindeutigen Identifizierung des Produktkäufers mitgeteilt wird. Als Produktkäuferkennung kann beispielsweise die hardwareseitig vorgebbare Gerätenummer der vom Produktkäufer zum Zwecke der Kommunikation mit dem Produktanbieter genutzten Kommunikationseinrichtung verwendet werden. Im Falle eines vom Produktkäufer zur Kommunikation mit dem Produktanbieter eingesetzten Computers kann dies beispielsweise die sogenannte MAC-Nr. des Computers sein. Im Falle eines vom Produktkäufer genutzten Mobiltelefons ist die eineindeutige Telefonchipkartennummer verwendbar. Unter Bekanntmachung dieser eineindeutigen Produktkäuferkennung hat sich der Produktkäufer gegenüber dem Produktanbieter bekannt zu machen, was beispielsweise durch einen Registrierungsvorgang erfolgen kann. Im Rahmen einer solchen Registrierung teilt der Produktkäufer dem Produktanbieter unter Nennung seiner eineindeutigen Produktkäuferkennung, das heißt seiner MAC-Nr., seiner Telefonkartenchipnummer oder dergleichen seinen Namen sowie gegebenenfalls weitere persönliche Daten, wie beispielsweise Adresse, Kreditkartennummer oder dergleichen mit. Sobald der Registrierungsvorgang abgeschlossen ist, kann seitens des Produktanbieters aufgrund der im Rahmen der Registrierung vom Produktkäufer angegebenen persönlichen Daten eine Zuordnung der eineindeutigen Produktkäuferkennung zu diesen persönlichen Daten vorgenommen werden, so daß der Produktanbieter die Person des Produktkäufers allein aufgrund der eineindeutigen Produktkäuferkennung identifizieren kann. Natürlich kann auch eine höherschichtige Identifikationsmöglichkeit vorgesehen sein. Alternativ zur Hardwareerkennung der Kommunikationskomponente kann beispielsweise eine Identifikation auch über die Kennung von weiteren Identifikationsmöglichkeiten, wie beispielsweise von Sicherheit-Chips oder von vom Nutzer hinterlegten Zertifikaten oder Nutzernamen oder dergleichen erfolgen.

Wird vom Produktkäufer nach erfolgreicher Registrierung beim Produktanbieter ein vom Produktkäufer wünschenswerterweise zu erwerbendes Produkt ausgewählt, so wird mit Auswahl des zu erwerbenden Produkts durch den Produktkäufer eine das Produkt eineindeutig identifizierende Produktkennung zusammen mit der dem Produktanbieter bekannten Produktkäuferkennung über ein Datennetz an den Produktanbieter automatisch übertragen. Im Falle eines Musikstückes als Produkt dient zur eineindeutigen Identifizierung des Musikstückes, das heißt als Produktkennung der Name des Interpreten des Musikstückes sowie der Musiktitel, das heißt der Musikstückname, welche Informationen beispielsweise bei einer Übertragung des Musikstückes über das Radio in dem vom Radiosender standardmäßig ausgegebenen RDS-Signal enthalten sind. Die Erfindung macht sich somit zunutze, daß die Ausstrahlung eines Musikstückes beispielsweise über einen Radiosender auch Informationen enthält, die das vom Musiksender ausgestrahlte Musikstück eineindeutig identifizieren lassen. Diese ein bestimmtes Musikstück identifizierende Information, das heißt die Produktkennung wird erfindungsgemäß nach einer Initiierung durch den Produktkäufer an den Produktanbieter weitergeleitet, und zwar unter gleichzeitiger Angabe der Produktkäuferkennung. Es werden mithin die Produktkennung sowie die Produktkäuferkennung automatisch an den Produktanbieter übertragen, so daß diesem das vom Produktkäufer gewünschte Produkt einerseits sowie die Person des Produktkäufers andererseits bekannt ist. Einer Zwischenschaltung des Produktkäufers dahingehend, als daß dieser das von ihm gewünschte Produkt oder seine Person zu identifizieren hätte, ist in vorteilhafter Weise nicht weiter erforderlich.

Anhand der an den Produktanbieter übermittelten Produktkennung und der an den Produktanbieter übermittelten Produktkäuferkennung erfolgt dann eine automatische Verarbeitung der durch den Produktkäufer initiierten Produktkaufanfrage, die im Falle der Produktverfügbarkeit automatisch abgewickelt wird.

Die erfindungsgemäße Verfahrensabwicklung bzw. Durchführung erweist sich insbesondere mit Bezug auf den Erwerb von Musikstücken deshalb als vorteilhaft, weil es seitens des Produktkäufers nicht erforderlich ist, das von ihm gewünschte Musikstück beispielsweise durch Angabe des Interpreten des Musikstückes und des Musiktitels, das heißt des Musikstücknamens zu identifizieren. Die Produktidentifizierung, das heißt die Musikstückidentifizierung wird erfindungsgemäß automatisch abgewickelt, so daß unter Verwendung des erfindungsgemäßen Verfahrens einem Produktkäufer die Möglichkeit geschaffen wird, auch solche Musikstücke über einen Produktanbieter zu beziehen, die er selbst nicht beispielsweise anhand des Interpreten des Musikstückes und des Musiktitels, das heißt des Musikstücknamens identifizieren kann. Alternativ zur vorbeschriebenen direkten Produktkennung kann auch eine indirekte Identifizierung des Produktes vorgenommen werden. Eine indirekte Identifizierung ergibt sich beispielsweise mit Blick auf ein Musikstück als Produkt dadurch, daß ein Endgerät über das erfindungsgemäße System meldet, daß es einen bestimmten Radiosender empfängt. Zusammen mit dieser Meldung wird die lokale Zeit bekannt gegeben. Diese beiden Daten allein reichen aus, um anbieterseitig ermitteln zu können, welches Musikstück der Produktkäufer meint. Anhand der beiden Daten "Radiosender" und "Uhrzeit" läßt sich das vom Produktkäufer gewünschte Musikstück an sich nicht identifizieren. Eine indirekte Identifizierung ist aber deshalb möglich, weil der Dritte, das heißt der Produktanbieter anhand dieser beiden Informationen eineindeutige Rückschlüsse auf das vom Produktkäufer gewünschte Produkt, das heißt das gewünschte Musikstück ziehen kann.

Die Produktkennung kann vom Produktanbieter oder einem Dritten, beispielsweise einem Radiosender bereitgestellt werden. Dabei erfolgt die Kommunikation zwischen dem Produktkäufer, dem Produktanbieter sowie gegebenenfalls dem Dritten, beispielsweise einem Radiosender via Internet und/oder Telefon.

Der Erwerb von Musikstücken kann unter Verwendung des Internets als Datennetz beispielsweise wie folgt abgewickelt werden. Ein Produktkäufer, das heißt ein Musikstückkäufer hört über das Internet Radio. Als Empfangsgerät dient dem Produktkäufer beispielsweise ein Computer, ein Internetradio oder dergleichen. Vernimmt der Produktkäufer über sein Empfangsgerät ein bestimmtes Musikstück, das er gerne käuflich erwerben möchte, so betätigt er im einfachsten Fall eine dafür am Empfangsgerät vorgesehene Taste. Sodann beginnt die erfindungsgemäße Verfahrensabwicklung. Dem Empfangsgerät ist das momentan empfangene Musikstück anhand des vom Radiosender beispielsweise versandten RDS-Signals bekannt, beispielsweise dadurch, daß das RDS-Signal Informationen über den Namen des Interpreten des Musikstückes und den Musiktitel, das heißt den Musikstücknamen enthält. Diese eineindeutige Produktkennung wird zusammen mit der Produktkäuferkennung über die durch den Internetanschluß bereitgestellte Rückleitung an den Produktanbieter übertragen. Da sich der Produktkäufer unter seiner Produktkäuferkennung zuvor beim Produktanbieter registriert hat, weiß der Produktanbieter über die Person des Produktkäufers Bescheid. Damit kennt der Produktanbieter sowohl die Person des Produktkäufers als auch das von ihm gewünschte Produkt, das heißt das von ihm gewünschte Musikstück. Der Produktanbieter übermittelt im Falle der Verfügbarkeit des vom Produktkäufer gewünschten Musikstückes dieses via Internet beispielsweise an das vom Produktkäufer betriebene Empfangsgerät, wo das Musikstück zur wiederholten Wiedergabe durch den Produktkäufer mittels eines entsprechenden Speichermediums gespeichert werden kann. Eine Übersendung des vom Produktkäufer gewünschten Musikstückes an den Produktkäufer via E-Mail ist selbstredend auch möglich.

Die Verfahrensdurchführung kann in vorbeschriebener Weise auch über Telefon, das heißt über das Telefonnetz als Datennetz abgewickelt werden. Dabei hat die Abwicklung des erfindungsgemäßen Verfahrens über das Telefonnetz den Vorteil, daß auch solche Empfangsgeräte für Musikstücke genutzt werden können, die selbst nicht ans Internet angeschlossen sind, wie beispielsweise Ukw-betriebene Radios. In diesem Fall ist die Produktkennung des vom Produktkäufer gewünschten Musikstückes von beispielsweise Ukw-betriebenen Radio mittels einer entsprechenden Schnittstelle, zum Beispiel Bluetooth auf ein Mobiltelefon des Produktkäufers zu übertragen. Mittels des Mobiltelefons plaziert der Produktkäufer seine Produktkaufanfrage, beispielsweise mittels SMS, wobei auch in diesem Fall die eineindeutige Produktkäuferkennung zusammen mit der zuvor auf das Mobiltelefon übertragenen Produktkennung an den Produktanbieter übertragen werden. Die weitere Verfahrensabwicklung erfolgt dann in der schon vorbeschriebenen Weise, das heißt der Produktanbieter versendet das vom Produktkäufer gewünschte Musikstück im Falle der Verfügbarkeit beispielsweise via Internet an den Produktkäufer zur individuellen und wiederholten Wiedergabe durch den Produktkäufer. Im Falle beispielsweise eines Ukw-Radios als vom Produktkäufer betriebenes Empfangsgerät, welches über keinen eigenen Rückkanal zum Produktanbieter verfügt, erfolgt eine Kommunikation zwischen dem Produktkäufer einerseits und dem Produktanbieter andererseits beispielsweise über das Telefonnetz via Mobiltelefon.

Die Verfahrensabwicklung erfolgt erfindungsgemäß unter Zwischenschaltung eines Vermittlers. Bei einer durch den Produktkäufer initiierten Produktkaufanfrage werden die zur Produktkaufabwicklung benötigten Informationen, das heißt die Produktkäuferkennung sowie die Produktkennung nicht direkt an den Produktanbieter, sondern an einen Vermittler übertragen. Dieser Vermittler bereitet die vom Produktkäufer empfangenen Daten auf und versendet diese an den Produktanbieter. "Aufbereitung" bzw. "Anpassung" im Sinne der Erfindung bedeutet im besonderen, daß die von einem Produktkäufer endgeräteseitig genutzte Kommunikationssprache in die des Produktanbieters übersetzt wird, weshalb der Vermittler auch als "Übersetzer" bezeichnet werden kann. Die Zwischenschaltung des Vermittlers hat insofern den großen Vorteil, daß unterschiedlichste von den Produktkäufern unter Umständen wünschenswerterweise zu benutzenden Kommunikationsendgeräte für eine Kommunikation mit dem Produktanbieter genutzt werden können. Die Kommunikationsintelligenz wird also vom Vermittler bereitgestellt, so daß unabhängig von einer Ausstattung der vom Produktkäufer genutzten Kommunikationsendgeräte eine bestimmungsgemäße Kommunikation mit dem Kommunikationsendgerät des Produktanbieters durchgeführt werden kann. Mit dem erfindungsgemäßen Verfahren bzw. dem erfindungsgemäßen System wird dies erstmals möglich.

Mit Blick auf das vorbeschriebene Beispiel des Musikstückkaufes kann gemäß einer ersten Verfahrensalternative vorgesehen sein, daß der Produktanbieter nach Erhalt der Produktkaufanfrage diese seinerseits abwickelt und der Produktkaufanfrage entsprechend das vom Produktkäufer gewünschte Musikstück an den Vermittler übersendet. Der Vermittler wiederum vermittelt das vom Produktanbieter erhaltene Produkt an den Produktkäufer weiter. Eine solche Verfahrensdurchführung ist insofern von Vorteil, als daß der Produktkäufer sich nur beim Vermittler hinsichtlich seiner Person zu registrieren hat. Der Vermittler kann seinerseits mit verschiedensten Produktanbietern zusammenarbeiten und das für den Produktkäufer günstigste Angebot automatisch heraussuchen. Unter Zwischenschaltung eines Vermittlers wird es einem Produktkäufer also erspart, sich selbst darum kümmern zu müssen, wer der für sein gewünschtes Produkt kostengünstigste Produktanbieter ist. Darüber hinaus wird es dem Produktkäufer erspart, sich bei gegebenenfalls mehreren zur Verfügung stehenden Produktanbietern jeweils registrieren zu lassen. Des weiteren kann die Inrechnungstellung zentral über den Vermittler abgewickelt werden, was für den Produktkäufer in vorteilhafter Weise Transparenz schafft.

Aus datentechnischen Gründen kann es gemäß einer alternativen Verfahrensdurchführung vorgesehen sein, daß in der schon vorbeschriebenen Weise eine automatisierte Produktkaufabwicklung initiiert wird, daß eine abschließende Bestätigung des Produktkaufes seitens des Produktkäufers direkt gegenüber dem Produktanbieter stattzufinden hat. In schon vorbeschriebener Weise kann die Produktkaufangebotsabwicklung unter Zwischenschaltung des Vermittlers durchgeführt werden. Beispielsweise der Vorteil des durch den Vermittler initiierten und durchgeführten Produktkaufpreisvergleiches kann so aufrechterhalten bleiben. Im Unterschied zur vorerläuterten Abwicklung ist es aus datentechnischen Gründen jedoch vorgesehen, daß der Produktkäufer nach erfolgreicher Vermittlung durch den Vermittler eine direkte kommunikationstechnische Verbindung mit dem Produktanbieter aufbaut, ganz gleich über welches Kommunikationsendgerät. Beim Produktanbieter liegen bereits sämtliche Informationen vor, da diese zuvor unter Verwendung des erfindungsgemäßen Verfahrens an den Produktanbieter übersandt worden sind. In einem direkten Gespräch, beispielsweise über das Telefon, kann dann eine Bestätigung des anvisierten Produktkaufes erfolgen, woraufhin es dann zum Abschluß des eigentlichen Kaufvertrages zwischen Produktkäufer und Produktanbieter kommt. Gemäß dieser Verfahrensalternative ist also ein Verfahren zur automatisierten Bereitstellung von Produktkaufinformationen vorgesehen, bei dem einem Produktkäufer eine ihn eineindeutig identifizierende Produktkäuferkennung zugeordnet, diese Produktkäuferkennung einem Produktanbieter zur eineindeutigen Identifizierung des Produktkäufers mitgeteilt wird, bei dem von dem Produktkäufer ein von ihm wünschenswerter Weise zu erwerbendes Produkt ausgewählt wird, wobei mit Auswahl des zu erwerbenden Produktes durch den Produktkäufer eine das Produkt eineindeutig identifizierende Produktkennung zusammen mit der dem Produktanbieter bekannten Produktkäuferkennung über ein Datennetz an den Produktanbieter automatisch übertragen wird, und bei dem produktanbieterseitig die vom Produktkäufer hierdurch initiierte Produktkaufanfrage anhand der an den Produktanbieter übermittelten Produktkennung und der an den Produktanbieter übermittelten Produktkäuferkennung automatisch verarbeitet und im Falle der Produktverfügbarkeit eine entsprechende Information an den Produktkäufer übersandt wird, auf Basis welcher Informationen der Produktkäufer seine abschließende Kaufentscheidung trifft.

Mit Blick auf die vorbeschriebene Anwendung des erfindungsgemäßen Verfahrens, nämlich den Erwerb von Musikstücken kann diese Verfahrensdurchführung unter Verwendung des Internets als Datennetz beispielsweise wie folgt abgewickelt werden. Ein Produktkäufer, das heißt ein Musikstückkäufer hört über das Internet Radio. Als Empfangsgerät dient dem Produktkäufer beispielsweise ein Computer, ein Internetradio oder dergleichen. Vernimmt der Produktkäufer über sein Empfangsgerät ein bestimmtes Musikstück, das er gerne käuflich erwerben möchte, so betätigt er im einfachsten Fall eine dafür am Empfangsgerät vorgesehene Taste. Sodann beginnt die erfindungsgemäße Verfahrensabwicklung. Dem Empfangsgerät ist das momentane empfangene Musikstück anhand des vom Radiosender beispielsweise versandten RDS-Signals bekannt, beispielsweise dadurch, daß das RDS-Signal Informationen über den Namen des Interpreten des Musikstückes und den Musiktitel, das heißt den Musikstücknamen enthält. Diese eineindeutige Produktkennung wird zusammen mit der Produktkäuferkennung über die durch den Internetanschluß bereitgestellte Rückleitung unter Zwischenschaltung des Vermittlers an den Produktanbieter übertragen. Da sich der Produktkäufer unter seiner Produktkäuferkennung zuvor beim Produktanbieter registriert hat, weiß der Produktanbieter über die Person des Produktkäufers Bescheid. Damit kennt der Produktanbieter sowohl die Person des Produktkäufers als auch das von ihm gewünschte Produkt, das heißt das von ihm gewünschte Musikstück. Der Produktanbieter übermittelt im Falle der Verfügbarkeit des vom Produktkäufer gewünschten Musikstückes via Internet an den Produktkäufer die für eine abschließende Produktkaufentscheidung relevanten Informationen, wie beispielsweise den Preis. Anhand dieser vom Produktanbieter bereitgestellten Informationen kann sich der Produktkäufer in aller Ruhe entscheiden, ob er das von ihm gewünschte Produkt beim Produktanbieter tatsächlich käuflich erwerben möchte oder nicht. Bejahendenfalls kontaktiert er den Produktanbieter, beispielsweise über standardmäßig zur Verfügung stehende Kommunikationswege, wie beispielsweise das Telefon oder das Internet. Alsdann wird der Kauf des vom Produktkäufer wünschenswerter Weise zu erwerbenden Produktes in standardmäßiger Weise abgewickelt.

Es versteht sich von selbst, daß die erfindungsgemäße Verfahrensabwicklung nicht auf den Kauf von zum Beispiel Musikstücken beschränkt ist. Das erfindungsgemäße Verfahren kann - soweit es überhaupt um Produktkauf geht - auch für andere Produkte eingesetzt werden, beispielsweise für Produkte, die dem Produktkäufer über die Werbung, beispielsweise im Radio, im Kino, im Fernsehen oder sonstwo angeboten werden. Von entscheidender Bedeutung für die Erfindung ist allein, daß das erfindungsgemäße Verfahren einem Produktkäufer die Möglichkeit bietet, zum Zwecke des käuflichen Erwerbs eines bestimmten Produktes die Bereitstellung von kaufrelevanten Informationen bezüglich dieses Produktes zu initiieren. Mit dem erfindungsgemäßen Verfahren wird somit quasi eine "Kauf-Taste" bzw. eine "Informations-Taste" zur Verfügung gestellt, die es einem Produktkäufer in vorteilhafter Weise ermöglicht, ein bestimmtes Produkt, das er selbst nicht eineindeutig identifizieren kann, entweder direkt kaufen zu können oder aber sich die für einen Kauf relevanten Informationen auf einfache Weise zielgerichtet beschaffen zu können.

Mit Blick auf die erfindungsgemäße Verfahrensdurchführung bzw. mit Blick auf das erfindungsgemäße System ist von Vorteil, daß die auf Seiten des ersten Teilnehmers, das heißt beispielsweise auf Seiten des Produktkäufers für eine Kommunikation verfügbaren Kommunikationsendgeräte nicht solche sein müssen, die eine Datenverarbeitung selbst vornehmen können. Es ist in vorteilhafter Weise vielmehr ausreichend, wenn das zur Kommunikation nach dem erfindungsgemäßen Verfahren eingesetzte Endgerät lediglich über solche Funktionen verfügt, die zur Darstellung, das heißt Präsentation von Inhalten notwendig sind, wie beispielsweise ein Display oder dergleichen. Die gesamte Datenverarbeitung der Rohdaten, das heißt bis zur Erzeugung darstellungsfähiger Menüdaten geschieht beim Vermittler, das heißt an zentraler Stelle. Der besondere Vorteil dieses Konzeptes liegt darin, daß Wartungen, Änderungen und Erweiterungen am System an zentraler Stelle ausgeführt werden können, was das zeit- und kostenaufwendige Vornehmen von Änderungen an jedem Einzelendgerät vermeidet. Änderungs- und/oder Umstellungsfehler können so vermieden werden.

Die mit dem erfindungsgemäßen Verfahren umsetzbaren Anwendungen haben gemein, daß eine Mehrzahl von unterschiedlichen Kommunikationsendgeräten vom ersten Teilnehmer genutzt werden können, das heißt verschiedene Endgeräte können mit einer Vielzahl von zweiten Teilnehmern, zum Beispiel Diensteanbietern kommunizieren. Der Vermittler dient als Übersetzer in zwei Richtungen. In der einen Richtung unterstützt er mehrere Gerätetypen, die er bei Verbindungsanfragen auf ein gemeinsames Format umrechnet. Auf Seiten des zweiten Teilnehmers, beispielsweise des Dienste-, das heißt Content-Anbieter sorgt der Vermittler für eine Übersetzung der von den Endgeräten empfangenen Befehle auf ein Format, welches von der IT-Infrastruktur des Dienste-, das heißt Content-Anbieters verarbeitet werden kann.

Aus Datenschutz- bzw. Datensicherheitsgründen kann das erfindungsgemäße Verfahren in vorteilhafter Weise mit besonderen Sicherheitsfunktionen genutzt werden. In vorteilhafter Weise lassen sich die marktbekannten Verschlüsselungsmethoden und Krypto-Schlüssel verwenden.

Ein weiterer Vorteil der Erfindung besteht darin, daß eine Anpassung eines bestimmten Endgerätes an einen speziellen Verwendungszweck nicht bei der Produktion des Gerätes erfolgen muß. Die Kommunikationsendgeräte können vielmehr frei programmierbar in neutraler Ausstattung hergestellt und ausgeliefert bzw. vom ersten Teilnehmer in Verwendung genommen werden. Da die Geräte anhand ihrer MAC-Adresse identifizierbar sind, kann der Verwendungszweck auch kurz vor der herstellerseitigen Auslieferung oder durch nachträgliche Meldung gesetzt und dazu jederzeit verändert werden. Dies unterscheidet sich wesentlich von anderen Branding-Methoden, in denen grundsätzlich ein Schreibzugriff auf die Software erforderlich ist, welcher in der Regel auch physikalischen Angriff auf das Gerät erforderlich macht.

Die Erfindung erweist sich auch deshalb als vorteilhaft, weil es in Abhängigkeit von der Implementierung auf der Dienstanbieterseite, das heißt in Abhängigkeit von der Implementierung seitens des zweiten Teilnehmers für Zugriffe über das erfindungsgemäße System, das heißt die erfindungsgemäße System-Struktur nicht erforderlich ist, ein eigenes, separates Zugangskonto vorzusehen. Es kann in vorteilhafter Weise vielmehr auf die Datenbasis eines bereits vorhandenen Kontos zugegriffen werden, zu dem seitens der Identifikation die Verbindung hergestellt wird (Matching). Dies macht die Nutzung und Pflege ein- und desselben Kontos von mehreren Endgeräten aus möglich.

Zur weiteren Verdeutlichung der Erfindung werden im nachfolgenden einige weitere Ausführungsbeispiele erörtert.

### Beispiel "Hotelmarkt"

Ein Dienstleister für große Hotelketten bietet für diese beispielsweise individuelle Musik- oder Audiostreams individuell an. Der Dienstleister, bei dem es sich mit Blick auf das erfindungsgemäße Verfahren um den Teilnehmer handelt, verfügt über eine ihm bekannte vollständige Auflistung aller von ihm mit Audiodaten zu versorgenden Geräten. Bei diesen Geräten kann es sich beispielsweise um einfache in den jeweiligen Hotels aufgestellte Radios handeln. Diese Auflistung enthält im Falle von Netzwerkstreamern alle MAC-Adressen, die einem betreuten Hotel und seinen Zimmern zugeordnet sind. Der Dienstleister, das heißt der zweite Teilnehmer kann anhand dieser Daten zuordnen, welches Zimmer in welchem Hotel welche Audiostreams erhalten soll. Die zimmergenaue Zuweisung der Streams kann der Dienstleister zum Beispiel über eine Weboberfläche vornehmen, hinter welcher der Vermittler nach dem erfindungsgemäßen System arbeitet. Die Einzelgeräte auf den Hotelzimmern fragen sobald ein Hotelgast den speziell dafür eingerichteten Menüeintrag auswählt (zum Beispiel die Anwahl des Radio-"Hotelkanals") an einer vordefinierten Adresse beim Vermittler an, welcher Inhalt für diese generierte Anfrage verfügbar ist. Der Vermittler gleicht über die ihm im Zusammenhang mit der Anfrage übersandte MAC-Adresse ab, ob die Anfrage von einem ihm zuvor bekannt gemachten Gerät kommt, und was für Inhalte an dieses Gerät auszuliefern sind. Nach erfolgreichem Abgleich stellt der Vermittler in Echtzeit, das heißt sofort den MAC-spezifischen Stream für das anfragende Gerät bereit.

### Beispiel "Musikportal-Anbindung"

Der Vermittler greift gemäß diesem Szenario auf eine Datenbank zu, in der alle angeschlossenen Netzwerkstreamer mit ihren MAC-Adressen bekannt sind, über die er ihnen gerätespezifische Inhalte ausliefert. Der Prozeß des Abgleiches "welche Inhalte sind für mich verfügbar?" wird von jedem Endgerät aus angestoßen, sobald der Nutzer des Endgerätes einen Menüeintrag auswählt, der auf den Vermittler zum Beispiel über dessen URL gerichtet ist. Um die Inhalte eines Online-Musikportals nutzen zu können, legt der Endkunde beim entsprechenden Portal einen "Useraccount" mit Zugangsdaten an. Für die Nutzung oder den Erwerb zahlungspflichtiger Inhalte oder Produkte werden zusätzlich die zur Zahlung notwendigen Daten beim Portalbetreiber hinterlegt. Dieses Portal ermöglicht es seinen so angemeldeten Nutzern, individuelle Musikzusammenstellungen aus dem kompletten Angebot zu erstellen und diese als Stream auf ihre jeweiligen Endgeräte auszuliefern. Für Netzwerkstreamer, die aufgrund ihrer technischen Funktionsweise nicht über die Möglichkeit verfügen oder verfügen sollen, mit jeder Kontaktaufnahme mit dem Musikportal einer Autentifizierung über "Username" und Paßwort vorzunehmen, muß jedoch die Verbindung zwischen Portal und Streamer anderweitig autentifiziert und etabliert werden, vorzugsweise ohne weitere Eingabe-Umstände für den Endkunden. Um dies zu realisieren, dient bei dem erfindungsgemäßen Verfahren eine geräte-spezifische Kennung, wie zum Beispiel die MAC-Adresse bei WLAN-fähigen Netzwerkstreamern. Diese wird erfindungsgemäß nur einmalig vom Endkunden, das heißt dem ersten Teilnehmer zusätzlich zu den schon beim Musik-Portalbetreiber bekannten Nutzerdaten angegeben, um seinen Nutzeraccount und sein Netzwerk-streamfähiges Gerät miteinander verbinden zu können.

Der Netzwerkstreamer des Endkunden, das heißt das Kommunikationsendgerät des ersten Teilnehmers wird so eingerichtet, daß über den Vermittler automatisch beim zweiten Teilnehmer, beispielsweise dem Musikportalbetreiber für die spezifische Geräteadresse angefragt wird, welche Daten, das heißt Informationen bzw. Inhalte zur Verfügung stehen. Der Vermittlung stellt auf diese Anfrage hin zunächst die Auswahlmöglichkeiten des Musikportals zur Verfügung und - nachdem der Endkunde diese angewählt hat - den Kontakt zum Musikportal her.

Der Vorteil für den Dienstleister, beispielsweise den Musikportalbetreiber, liegt mit Blick auf die erfindungsgemäße Verfahrensdurchführung darin, daß der Vermittler die komplette Intelligenz einer gesicherten Kommunikationsverbindung zur Verfügung stellt, was die Einbindungsfähigkeit unterschiedlichster Endgerätetypen gewährleistet, die ihrerseits individuell nicht verwendbar wären.

Das Musikportal kann zum einen geräte-unspezifische Daten an den Endkunden über einen Rückkanal zurückgeben. Dies sind vorzugsweise Daten, die allen Endkunden gleichermaßen zur Verfügung gestellt werden, auch beispielsweise solchen, die nicht registriert und insofern unbekannt sind.

Ist dem Musikportal das Anfragen der Geräte über seine Gerätekennung bekannt und mit einem Endkunden-, das heißt Nutzer-Konto verbunden, so liefert es an den Nutzer Nutzer-, das heißt Kunden-spezifische Daten zurück. Wichtig in diesem Zusammenhang ist, daß der Vermittler über kundenspezifische Daten für eine erfolgreiche Durchführung des erfindungsgemäßen Verfahrens nicht Bescheid wissen muß. Dem Vermittler werden lediglich eineindeutige Teilnehmerkennungen, wie zum Beispiel Geräte-spezifische MAC-Nummern mitgeteilt. Eine Verknüpfung mit kundenspezifischen Daten findet ausnahmslos beim Dienstleister statt. Nur dieser kann anhand der eineindeutigen Teilnehmernummer auf die Person des Teilnehmers schließen. Dem Vermittler ist dies nicht möglich.

### Beispiel "Click and action"

Das erfindungsgemäße Verfahren bzw. das erfindungsgemäße System ermöglicht auch die Abfrage und Darstellung/Abbildung erweiterter Menüs und Funktionalitäten von einem Dienstleister für Inhalte, beispielsweise einem Musikportalbetreiber auf den bekannten Kommunikationsendgeräten seitens des ersten Teilnehmers.

Während beispielsweise des Anhörens von Musik kann der Nutzer des Musikportals über einen Knopfdruck beim Vermittler anfragen, welche erweiterten Möglichkeiten im Moment des Knopfdrucks zum momentan gehörten Musikstück, das heißt des Stream zur Verfügung stehen. In diesem Moment gleicht der Vermittler ab, welche Daten auf dem Endgerät zurückgeliefert werden müssen und liefert dem Nutzer auf das Display seines Endgeräte ein Auswahlmenü mit allen möglichen Handlungsweisen, die für dieses Gerät im Benutzungskontext zur Verfügung stehen.

Zu einer möglich zurückgelieferten Option kann der Erwerb des soeben gehörten Musikstückes zählen. Der Verwender, das heißt Kunde erhält also zum Beispiel ein Auswahlmenü mit der Option "dieses Musikstück erwerben" vom Vermittler zurück. Mit der Auswahl dieses Menüpunktes wird dem Musikanbieter, das heißt dem Betreiber des Musikportals vom Vermittler die Kaufanfrage des Nutzers übermittelt, und zwar zusammen mit der eineindeutigen Kennung des vom Nutzer verwendeten Kommunikationsendgerätes, das heißt der eineindeutigen Teilnehmerkennung sowie den für die Identifizierung des Musikstückes notwendigen Informationen, wie zum Beispiel Metadaten oder Zeit- und Streaminformationen oder eindeutige Medienkennungen. Musikportalseitig wird nun das angefragte Stück in dem dem Nutzerkonto zugeordneten "Einkaufswagen" gelegt.

Für den eigentlichen Erwerb des gewünschten Musikstückes muß der Nutzer, das heißt erste Teilnehmer sich direkt beim Musikportal über seine Nutzerkennung anmelden und die Inhalte des beim Musikportalbetreibers im Nutzerbereich verfügbaren Einkaufswagens für die Auslösung des eigentlichen Kaufvorganges final bestätigen. Erst mit dieser Bestätigung werden alle weiteren zum Kauf notwendigen Abläufe und Seiten des Musikportals ausgelöst. Vor der Bestätigung erhält der Kunde damit noch einmal die Möglichkeit, falsche oder versehentlich markierte oder zwischenzeitlich nicht mehr gewünschte Musikstücke aus dem virtuellen Einkaufswagen zu entfernen. Auf diese Art und Weise verbleibt die Ausführung des Kaufvertrages jeweils beim Anbieter der Ware, der Vermittler vermittelt also lediglich den Kaufwunsch an den zweiten Teilnehmer weiter. Neben dem Vorbeschriebenen ist es auch möglich, daß die zurückgelieferte Option auch das Angebot einer erweiterten Funktionalität umfassen kann. Dem Kunden könnte beispielsweise auch ein Auswahlmenü zur Verfügung gestellt werden, die die zusätzlichen Funktionen "mehr Musik von diesem Künstler" und/oder "mehr Musik wie die gehörte" enthalten. Jede der verfügbaren Optionen bietet Funktionalitäten an, die je nach den an den Vermittler angeschlossenen Dienst sehr unterschiedlich sein können. Das Anwendungsspektrum des erfindungsgemäßen Verfahrens bzw. des erfindungsgemäßen Systems ist insoweit sehr vielfältig.

Weitere Merkmale und Vorteile der Erfindung ergeben sich aus der nachfolgenden Beschreibung anhand der Fign. Dabei zeigen:
- Fig. 1: in schematischer Darstellung eine erfindungsgemäße Verfahrensabwicklung anhand eines ersten Ausführungsbeispiels;

- Fig. 2: in schematischer Darstellung ein Internetradio;
- Fig.3: in einer schematischen Darstellung eine erfindungsgemäße Verfahrensabwicklung anhand eines zweiten Ausführungsbeispiels und
- Fig.4: in einer schematischen Darstellung eine erfindungsgemäße Verfahrensabwicklung anhand eines dritten Ausführungsbeispiels.

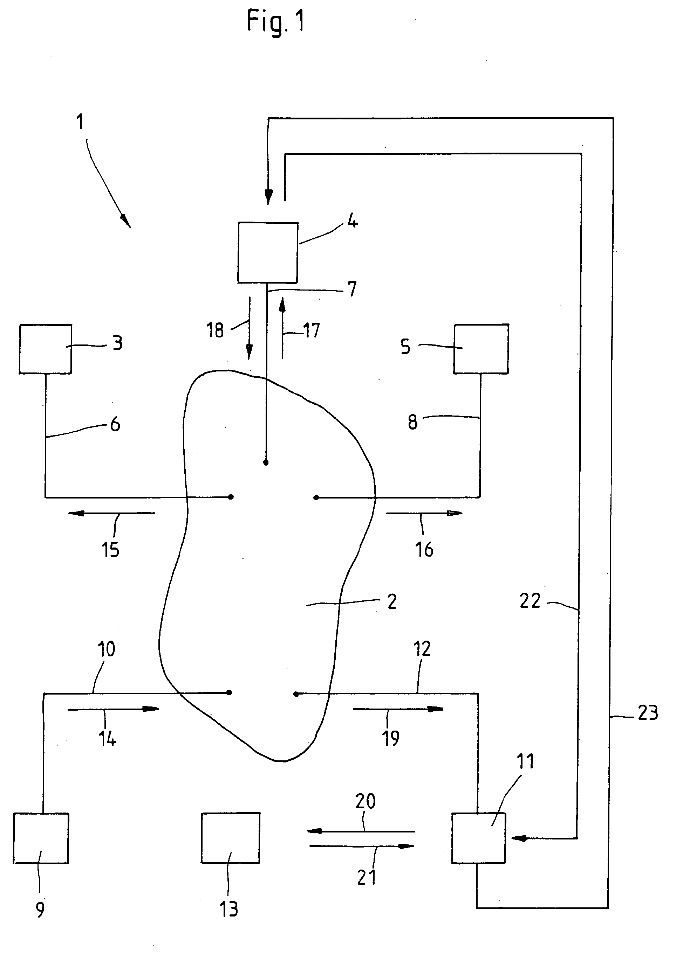

Fig. 1 zeigt in schematischer Darstellung das erfindungsgemäße System 1 zur erfindungsgemäßen Verfahrensabwicklung. Es wird beispielhaft die Kaufabwicklung bezüglich eines Musikstückes als Produkt im Sinne der Erfindung erläutert. Dabei versteht es sich von selbst, daß das Ausführungsbeispiel nicht beschränkend gelten soll, und daß das erfindungsgemäße Verfahren bzw. das erfindungsgemäße System auch für andere Produkte als für Musikstücke genutzt werden kann bzw. Anwendung finden kann.

Das erfindungsgemäße System 1 umfaßt ein Datennetz, welches gemäß dem Ausführungsbeispiel nach Fig. 1 durch das Internet 2 realisiert ist. Über entsprechende Verbindungsleitungen 6, 7 und 8 sind an das Internet 2 eine Mehrzahl von potentiellen Produktkäufern 3, 4 und 5 angeschlossen. Produktkäuferseitig kommen zu diesem Zweck entsprechende Geräte zum Einsatz, wie zum Beispiel Computer, Internetradios, Mobiltelefone oder dergleichen.

Über entsprechende Verbindungsleitungen 10 und 12 sind an das Internet 2 des weiteren ein Radiosender 9, das heißt ein Dritter im Sinne der Erfindung, sowie ein Vermittler 11 angeschlossen. Der Radiosender 9 speist in an sich bekannter Weise Radiosendungen über die Verbindungsleitung 10 ins Internet 2 ein, die von den Produktkäufern 3, 4 und 5 empfangen werden können.

Das System 1 verfügt darüber hinaus über eine Datenverarbeitungsanlage, die vermittlerseitig installiert ist und die über die Verbindungsleitung 12 und das Internet 2 in kommunikationstechnischer Verbindung mit den Produktkäufern 3, 4 und 5 steht.

Das beispielsweise vom Produktkäufer 4 genutzte Empfangsgerät zum Empfang der vom Radiosender 9 ins Internet 2 eingespeisten Radiosendung trägt eine hardwareseitig vorgegebene eineindeutige Kennummer. Im Falle eines Computers oder Internetradios ist diese eineindeutige Kennummer beispielsweise durch die chipherstellerseitige MAC-Nr. gegeben.

Unter Bekanntmachung der eineindeutigen Gerätenummer des beispielsweise vom Produktkäufer 4 genutzten Empfangsgerätes meldet sich der Produktkäufer 4 beim Vermittler 11 in einem ersten und einmalig durchzuführenden Verfahrensschritt an. Die Anmeldung, das heißt Registrierung des Produktkäufers 4 beim Vermittler 11 erfolgt unter Eingabe der eineindeutigen Gerätenummer sowie der Angabe von persönlichen Daten, wie zum Beispiel der Adresse, der E-Mail oder dergleichen Daten des Produktkäufers 4. Nach abgeschlossenem Registrierungsvorgang ist dem Vermittler 11 die Person des Produktkäufers 4 bekannt und der Vermittler 11 kann unter Zuordnung der eineindeutigen Gerätenummer, das heißt der Produktkäuferkennung zu den vom Produktkäufer 4 dem Vermittler 11 zuvor bekannt gemachten persönlichen Daten eine Identifizierung des Produktkäufers 4 allein anhand der Gerätenummer, das heißt der Produktkäuferkennung vornehmen. Die Vermittlung der persönlichen Daten des Produktkäufers 4 an den Vermittler 11 zum Zwecke der Registrierung ist in der Darstellung nach Fig. 1 symbolhaft durch den Pfeil 22 dargestellt. Dabei kann die Kommunikation zwischen dem Produktkäufer 4 und dem Vermittler 11 in einfacher Weise über das Internet 2 erfolgen. In gleicher Weise können sich auch die Produktkäufer 3 und 5 beim Vermittler 11 registrieren, was der besseren Übersicht wegen in der Darstellung nach Fig. 1 im besonderen nicht dargestellt ist.

Der Radiosender 9 speist über die Verbindungsleitung 10 ein Radioprogramm in das Internet 2 ein, was die Produktkäufer, so auch der Produktkäufer 4 in an sich bekannter Weise empfangen können. Die Programmeinspeisung durch den Radiosender 9 umfaßt bezüglich eingespeister Musikstücke auch ein Signal, beispielsweise ein RDS-Signal, das bezüglich eines vom Radiosender 9 ins Internet 2 eingespeisten Musikstückes Informationen über den Interpreten des Musikstückes und den Musiktitel, das heißt den Musikstücknamen enthält. Diese zusammen mit dem Musikstück vom Radiosender 9 ins Internet 2 eingespeiste Information erlaubt eine eineindeutige Identifizierung des Musikstückes, das heißt diese vom Radiosender 9 ins Internet 2 eingespeiste Information stellt eine eineindeutige Produktkennung, das heißt Musikstückkennung dar. Die radiosenderseitige Einspeisung dieser eineindeutigen Musikstückkennung ist in der Darstellung nach Fig. 1 symbolisch durch den Pfeil 14 dargestellt.

Die vom Radiosender 9 ins Internet 2 eingespeiste eineindeutige Produktkennung, das heißt Musikstückkennung wird von den Produktkäufern 3, 4 und 5 bzw. von den von den Produktkäufern 3, 4 und 5 verwendeten Empfangsgeräten empfangen. In der Darstellung nach Fig. 1 ist der Empfang dieser eineindeutigen Musikstückkennung durch die Produktkäufer 3, 4 und 5 durch die Pfeile 15, 16 bzw. 17 dargestellt.

Ein Produktkäufer, beispielsweise der Produktkäufer 4 nach Fig. 1, der ein vom Radiosender 9 ins Internet 2 eingespieltes Musikstück käuflich erwerben möchte, plaziert eine an den Vermittler 11 gerichtete Kaufanfrage dadurch, daß er beispielsweise eine an sein Empfangsgerät hierfür vorhandene Taste betätigt. Infolge der Tastenbetätigung durch den Produktkäufer 4 wird über das Internet 2 vom Produktkäufer 4 eine Nachricht an den Vermittler 11 versendet, die einerseits die eineindeutige Musikstückkennung des vom Produktkäufer 4 wünschenswerterweise zu erwerbenden Musikstückes sowie andererseits die eineindeutige Produktkäuferkennung beinhaltet. Diese wenigstens die Musikstückkennung und die Produktkäuferkennung umfassende Mitteilung ist mit Bezug auf den Produktkäufer 4 in der Darstellung nach Fig. 1 durch den Pfeil 18 symbolisiert. Den Empfang dieser Nachricht durch den Vermittler 11 ist in der Darstellung nach Fig. 1 durch den Pfeil 19 dargestellt.

Die eineindeutige Musikstückkennung ist dem vom Produktkäufer 4 genutzten Empfangsgerät aufgrund der Signalübertragung durch den Radiosender 9 bekannt. In vorteilhafter Weise muß der Produktkäufer 4 also nicht wissen, wie das von ihm gewünschte Musikstück heißt oder wie der Name des Interpreten dieses Musikstückes ist. Die diesbezügliche Information ist dem vom Produktkäufer 4 genutzten Empfangsgerät aufgrund der Signalvermittlung gemäß der Pfeile 14 und 17 bekannt, so daß diese Information in einfacher Weise dazu genutzt werden kann, das vom Produktkäufer 4 wunschgemäß zu erwerbende Musikstück in eineindeutiger Weise gegenüber dem Vermittler 11 identifizierbar zu machen. Da dem Vermittler 11 die Person des Produktkäufers 4 aufgrund der zuvor erfolgten Registrierung des Produktkäufers 4 bekannt ist, der Vermittler 11 also durch die eineindeutige Kennummer des vom Produktkäufers 4 verwendeten Empfangsgerätes, das heißt der Produktkäuferkennung eine Zuordnung zu den persönlichen Daten des Produktkäufers 4 vornehmen kann, erlaubt allein die Übermittlung der Produktkennung sowie der Produktkäuferkennung an den Vermittler 11 in Entsprechung der Signalübertragung gemäß der Pfeile 18 und 19 an den Vermittler 11 eine produktkäuferseitig gewünschte Abwicklung seiner Kaufanfrage durch den Vermittler 11.

Der Vermittler 11 übermittelt die Kaufanfrage des Produktkäufers 4 an einen Produktanbieter 13, das heißt im Ausführungsbeispiel nach Fig. 1 an eine Musikdownloadplattform. Die Signalübertragung zwischen Vermittler 11 und Produktanbieter 13 ist in der Darstellung nach Fig. 1 durch den Pfeil 20 symbolisiert.

Der Produktanbieter 13 stellt nach einer durch den Vermittler 11 vermittelten Kaufanfrage durch den Produktkäufer 4 das vom Produktkäufer 4 gewünschte Musikstück zur Verfügung und überträgt dieses an den Vermittler 11. Die Übertragung des vom Produktkäufer 4 gewünschten Musikstücks an den Vermittler 11 ist in der Darstellung nach Fig. 1 durch den Pfeil 21 dargestellt. Die Kommunikation zwischen dem Vermittler 11 und dem Produktanbieter 13 erfolgt in vorteilhafter Weise über das Internet 2.

Nach Eingang des vom Produktkäufer 4 gewünschten Musikstückes beim Vermittler 11 übersendet dieser das Musikstück an den Produktkäufer 4 beispielsweise über das Internet 2 an die dem Vermittler 11 bekannte E-Mail-Adresse des Produktkäufers 4. Die Übertragung des Musikstückes vom Vermittler 11 an den Produktkäufer 4 ist in der Darstellung nach Fig. 1 durch den Pfeil 23 gekennzeichnet.

Anstelle einer Verfahrensabwicklung über das Internet 2, wie vorstehend anhand von Fig. 1 beschrieben, kann als Datennetz zur Kommunikation zwischen dem Produktkäufer 4 und dem Vermittler 11 auch das Telefonnetz genutzt werden, was sich insbesondere dann anbietet, wenn der Produktkäufer 4 als Empfangsgerät von zum Beispiel Radiosendungen nicht über ein mit einem Rückkanal versehenes Internetradio, sondern über ein Antennenradio, wie beispielsweise ein Ukw-Radio verfügt. In diesem Fall wird die eineindeutige Musikstückkennung gemäß der Signalübertragung nach den Pfeilen 14 und 17 gemäß Fig. 1 in gleicher Weise wie in der vorstehend beschriebenen von dem Empfangsgerät des Produktkäufers 4 empfangen und alsdann über eine entsprechende Schnittstelle, beispielsweise Bluetooth, auf ein vom Produktkäufer 4 verwendetes Mobilfunkgerät übertragen. Mittels des Mobilfunkgerätes überträgt der Produktkäufer 4 sodann die Produktkennung einschließlich seiner Produktkäuferkennung über das Telefonnetz an den Vermittler 11. Die weitere Verfahrensabwicklung, das heißt die Kommunikation zwischen dem Vermittler 11 und dem Produktanbieter 13 einerseits und dem Vermittler 11 und dem Produktkäufer 4 andererseits kann dann in der schon vorbeschriebenen Weise über das Internet 2 abgewickelt werden.

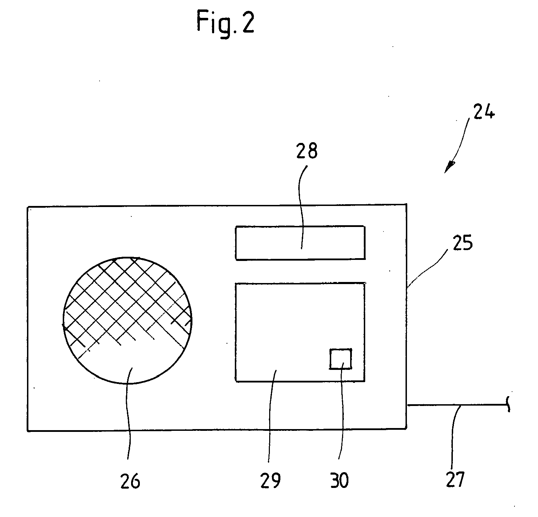

Fig. 2 zeigt in schematischer Darstellung ein vom Produktkäufer 4 verwendbares Empfangsgerät in Form eines Internetradios 24. Das Internetradio 24 umfaßt ein Gehäuse 25, das die elektronischen Baukomponenten des Internetradios 24 aufnimmt. Ein beispielhaft dargestellter Lautsprecher 26 ist frontseitig des Gehäuses 25 angeordnet, wie aus Fig. 2 zu erkennen ist. Über einen Datennetzanschluß 27 kann das Internetradio 24 an das Internet 2 angeschlossen werden.

Frontseitig des Internetradios 24 befindet sich in der Darstellung nach Fig. 2 des weiteren ein Anzeigenfeld 28 sowie ein Bedienfeld 29. Das Anzeigenfeld 28 kann beispielsweise dazu dienen, die Musikstückkennung, die dem Internetradio 24 gemäß der Signalübertragung nach den Pfeilen 14 und 17 gemäß der Darstellung nach Fig. 1 bekannt ist, das heißt den Namen des Interpreten des Musikstücks sowie den Musiktitel, das heißt den Musikstücknamen textlich anzuzeigen.

Das Bedienfeld 29 umfaßt eine Mehrzahl von Tasten, die der Bedienung des Internetradios 24 dienen und die der besseren Übersicht wegen in der schematischen Darstellung nach Fig. 2 nicht dargestellt sind. Das Bedienfeld 29 umfaßt in der Darstellungsform nach Fig. 2 wenigstens eine Taste 30, die als "Kauftaste" bezeichnet werden kann. Betätigt der Produktkäufer 4 diese "Kauftaste" 30, so wird die dem Internetradio 24 bekannte Musikstückkennung des momentan empfangenen Musikstückes zusammen mit der Produktkäuferkennung in der anhand von Fig. 1 vorbeschriebenen Weise an den Vermittler 11 übertragen.

Wie das vorerläuterte Beispiel erkennen läßt, liegt der besondere Vorteil des erfindungsgemäßen Verfahrens bzw. des erfindungsgemäßen Systems darin, daß der Produktkäufer 4 das von ihm wünschenswerterweise zu erwerbende Produkt, das heißt im Ausführungsbeispiel nach den Fign. 1 und 2 zu erwerbende Musikstück namentlich nicht benennen können muß. Die Produktkaufabwicklung erfolgt vielmehr automatisch, weil vom vom Produktkäufer 4 genutzten Empfangsgerät die zur Plazierung einer Kauforder notwendige Information über das vom Produktkäufer 4 wünschenswerterweise zu erwerbende Produkt und über seine Person automatisch generiert und im einfachsten Fall per "Tastendruck" an einen Vermittler 11 und/oder direkt an einen Produktanbieter 13 übertragen werden, der dann die vom Produktkäufer 4 initiierte Kaufanfrage bearbeitet und abwickelt.

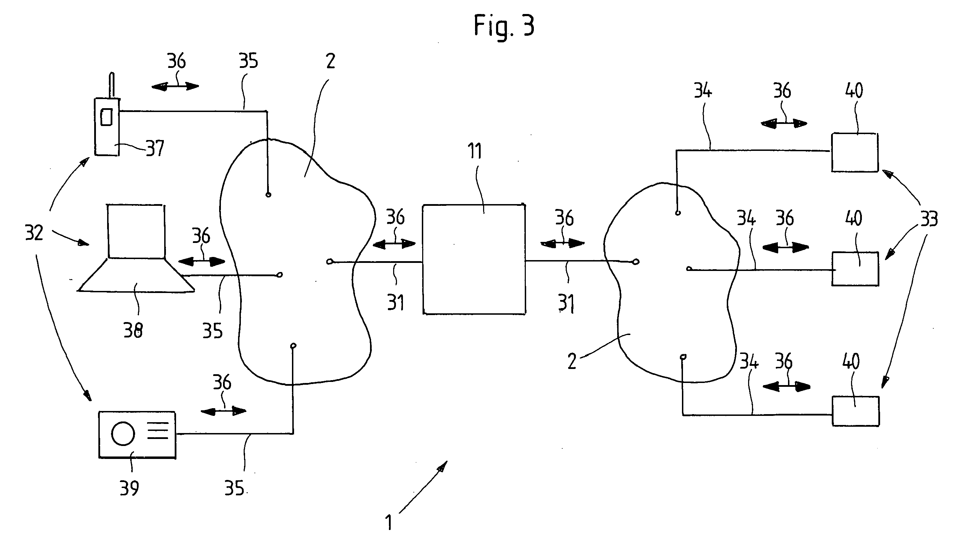

In Fig. 3 ist in schematischer Darstellung ein weiteres Ausführungsbeispiel gezeigt.

Wie der Darstellung nach Fig. 3 zu entnehmen ist, stehen erste Teilnehmer 32 und zweite Teilnehmer 33 unter Zwischenschaltung eines Vermittlers 11 in kommunikationstechnischer Verbindung. Im gezeigten Ausführungsbeispiel erfolgt die kommunikationstechnische Verbindung über das Internet 2 als Datennetz, wobei der Vermittler einerseits mit den ersten Teilnehmern 32 und andererseits mit den zweiten Teilnehmern 33 in kommunikationstechnischer Verbindung steht. Die Verbindung des Vermittlers 11 zum Internet 2 ist durch die Verbindungsleitung 31 symbolisiert. Die Verbindungsleitungen 34 und 35 stellen die Verbindungen zwischen den Teilnehmern 32 und 33 einerseits sowie dem Internet 2 andererseits dar. Die Kommunikation zwischen den einzelnen Kommunikationspartnern, das heißt den ersten Teilnehmern 32, den zweiten Teilnehmern 33 und dem Vermittler 11 erfolgt in Richtung der Pfeile 36, das heißt sowohl in der einen als auch in der anderen Richtung.

Die ersten Teilnehmer 32 verfügen zum Zwecke der Kommunikation über entsprechende Kommunikationsendgeräte. Diese können als Telefon 37, beispielsweise als Mobiltelefon, als Computer 38 oder als internetfähiges Radio 39 ausgebildet sein. Auf Seiten der zweiten Teilnehmer 33 sind im gezeigten Ausführungsbeispiel Inhalte-, das heißt sogenannte Content-Dienstleister 40 vorgesehen.

Eine Informationsvermittlung zwischen den ersten Teilnehmern 32 und den zweiten Teilnehmern 33 geschieht unter Zwischenschaltung des Vermittlers 11, das heißt eine von einem ersten Teilnehmer 32 ausgehende Information wird dem Vermittler 11 zugeführt, der diese dann gegebenenfalls übersetzt und über das Internet 2 an den Content-Dienstleister 40 weiterreicht. Diese Kommunikation kann auch in umgekehrter Richtung erfolgen, wie die Pfeile 36 darstellen.

Das in Fig. 3 dargestellte Beispiel betrifft den Anwendungsfall des "MusikstückKaufes". Dabei erfolgt der eigentliche Kauf, das heißt die Bestätigung der mittels des erfindungsgemäßen Verfahrens initiierten Auftragsabwicklung über eine in Fig. 3 nicht dargestellte direkte kommunikationstechnische Verbindung zwischen erstem Teilnehmer 32 und zweitem Teilnehmer 33.

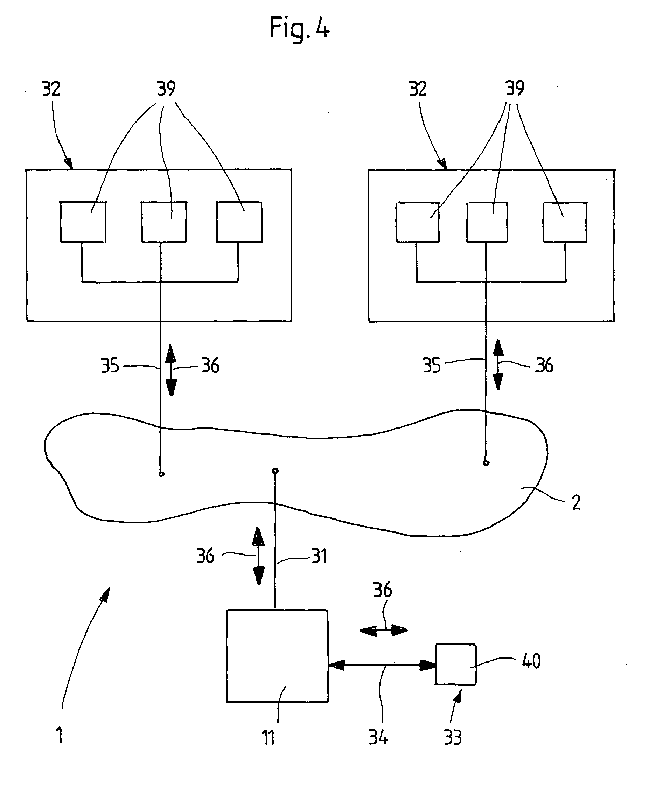

Fig. 4 zeigt ein weiteres Ausführungsbeispiel, demgemäß vorausgesuchte Inhalte von einem Content-Dienstleister 40 auf Anfrage an erste Teilnehmer 32 übersandt werden. Als erste Teilnehmer 32 kommen beispielsweise Hotels in Frage, die einen hoteleigenen Radiokanal zur Verfügung stellen. Der Inhalt für diesen hoteleigenen Radiokanal wird über das Internet von dem Content-Dienstleister 40 zur Verfügung gestellt. Der Vermittler 11 übernimmt die Zuordnung der vom Content-Dienstleister 40 insgesamt zur Verfügung gestellten Inhalte auf die jeweiligen Kommunikationsendgeräte, beispielsweise auf Radios 39, wie in Fig. 4 dargestellt. Mittels des erfindungsgemäßen Verfahrens kann zwischen den Endgeräten der einzelnen ersten Teilnehmer 32 unterschieden werden, so daß in automatisierter Weise eine wunschgemäße Zuordnung von einzelnen Inhalten vorgenommen werden kann.

### Bezugszeichenliste

- 1: System
- 2: Internet
- 3: Produktkäufer
- 4: Produktkäufer
- 5: Produktkäufer
- 6: Verbindungsleitung
- 7: Verbindungsleitung
- 8: Verbindungsleitung
- 9: Radiosender
- 10: Verbindungsleitung
- 11: Vermittler
- 12: Verbindungsleitung
- 13: Produktanbieter
- 14-23: Pfeil
- 24: Internetradio
- 25: Gehäuse
- 26: Lautsprecher
- 27: Datennetzanschluß
- 28: Anzeigenfeld
- 29: Bedienfeld
- 30: Taste
- 31: Verbindungsleitung
- 32: erster Teilnehmer
- 33: zweiter Teilnehmer
- 34: Verbindungsleitung
- 35: Verbindungsleitung
- 36: Pfeil
- 37: Mobiltelefon
- 38: Computer
- 39: Radio
- 40: Content-Dienstleister

## Patentansprüche

1. Verfahren zur automatisierten Vermittlung von Informationen zwischen kommunikationstechnisch miteinander verbundenen Teilnehmern eines Informationsvermittlungssystems, bei dem einem ersten Teilnehmer (32) eine ihn eineindeutig identifizierende Teilnehmerkennung zugeordnet und diese Teilnehmerkennung einem zweiten Teilnehmer (33) zur eineindeutigen Identifizierung des ersten Teilnehmers (32) mitgeteilt wird, bei dem der erste Teilnehmer (32) eine an den zweiten Teilnehmer (33) zu übermittelnde Information generiert, die zusammen mit der den ersten Teilnehmer (32) eineindeutig identifizierende Teilnehmerkennung an einem Vermittler (11) übersandt wird, der eine Vermittlung an den zweiten Teilnehmer (33) automatisch vornimmt, indem die vom ersten Teilnehmer (32) generierte Information zusammen mit der Teilnehmerkennung des ersten Teilnehmers mittels des Vermittlers (11) an den zweiten Teilnehmer (33) zur weiteren Verarbeitung übertragen wird.

2. Verfahren nach Anspruch 1, **dadurch gekennzeichnet, daß** vom zweiten Teilnehmer (33) eine Information an den ersten Teilnehmer (32) unter Zwischenschaltung des Vermittlers (11) rückübersandt wird.

3. Verfahren nach Anspruch 1 oder 2, **dadurch gekennzeichnet, daß** der Vermittler (11) eine Anpassung der an den ersten bzw. den zweiten Teilnehmer (32, 33) weiterzuleitenden Information vornimmt.

4. Verfahren nach einem der vorhergehenden Ansprüche, **dadurch gekennzeichnet, daß** die Kommunikation zwischen erstem Teilnehmer (32) und Vermittler (11) sowie zwischen Vermittler (11) und zweitem Teilnehmer (33) via Internet (2) erfolgt.

5. System zur automatisierten Vermittlung von Informationen zwischen zwei kommunikationstechnisch miteinander verbundenen Teilnehmern (32, 33), mit einem die Teilnehmer (32, 33) kommunikationstechnisch miteinander verbindenden Datennetz (2) und einer Einrichtung (11) zur automatisierten Vermittlung von Informationen zwischen den beiden Teilnehmern (32, 33), welche Einrichtung (11) den beiden Teilnehmern (32, 33) zwischengeschaltet ist, wobei für eine eineindeutige Identifizierung eines ersten Teilnehmers (32) gegenüber einem zweiten Teilnehmer (33) dem ersten Teilnehmer (32) eine eineindeutige Teilnehmerkennung zuordbar ist, die an den zweiten Teilnehmer (33) unter Zwischenschaltung der Einrichtung (11) zur automatischen Informationsvermittlung übertragbar ist.

6. System nach Anspruch 5, **gekennzeichnet durch** einen Rückkanal zwischen den beiden Teilnehmern (32, 33).

7. System nach Anspruch 5 oder 6, **dadurch gekennzeichnet, daß** die Einrichtung (11) zur automatisierten Informationsvermittlung die Kommunikationsintelligenz für den ersten Teilnehmer (32) bereitstellt.
